# FASCICULE DE BREVET EUROPEEN

(11) **EP 1 892 688 B1**
(45) Date de publication et mention de la délivrance du brevet: **01.09.2010**
(21) Numéro de dépôt: 07113817.6
(22) Date de dépôt: 03.08.2007
(51) Int. Cl.: G08G 1/16

(54) **Procédé de détermination de passage d'un véhicule dans un goulet**
Verfahren zur Bestimmung der Durchfahrt eines Fahrzeugs durch eine engen Durchlass
Method for determining the passing of a vehicle in a bottleneck

(30) Priorité: 24.08.2006 DE 102006041651; 16.03.2007 FR 0701945
(43) Date de publication de la demande: 27.02.2008
(73) Titulaire: VALEO VISION, 93012 Bobigny (FR)
(72) Inventeur: Herbin, Anne, 75011 Paris (FR); Reilhac, Patrice, 73732 Esslingen (DE)

(56) Documents cités:
- EP-A- 1 470 958
- DE-A1-102005 062 151
- FR-A- 2 863 091
- US-A1- 2002 128 754
- US-A1- 2004 056 950

## Description

### Domaine de l'invention

La présente invention concerne un procédé de détermination de la capacité de passage d'un véhicule dans un goulet de la chaussée et un système d'assistance au conducteur du véhicule à cet effet.

Elle trouve une application particulière dans le domaine des véhicules automobiles.

### Etat de la technique

Pendant la conduite d'un véhicule, il peut arriver qu'un goulet apparaisse sur la chaussée dans la direction de marche. Un goulet de ce type de la chaussée peut être par exemple un goulet sur un chantier, un tunnel, un passage sous un pont ou encore un parking. Le goulet peut concerner une largeur limitée de la chaussée et/ou une hauteur limitée de passage et/ou une longueur limite.

Un procédé de détermination de la capacité de passage d'un véhicule dans un goulet de la chaussée est divulgué dans la EP-A-1470958.

### Objet de l'invention

La présente invention a pour but de fournir un procédé et un système associé d'assistance au conducteur, permettant de déterminer s'il est possible de passer un goulet de la chaussée sans dommages.

Selon l'invention, ce but est atteint par un procédé de détermination de la capacité de passage d'un véhicule dans un goulet de la chaussée comportant les étapes de :
- détecter un goulet de la chaussée,
- définir une image du véhicule, et
- comparer l'image du véhicule avec le goulet.

Un procédé de ce type présente l'avantage de permettre de constater de manière simple si le véhicule passera le goulet. Il permet ainsi, d'éviter d'abîmer la voiture ou plus grave d'avoir des accidents. De plus, c'est un moyen pour aider un utilisateur du véhicule à manoeuvrer son véhicule.

Selon l'invention, le goulet est représenté sur un affichage et une image du véhicule est représentée dans le plan de l'image et à l'échelle de grandeur du goulet, de telle façon qu'une comparaison du goulet avec l'image du véhicule permette de constater visuellement si le véhicule peut passer ce goulet sans dommages.

Dans un mode de réalisation non limitatif, la comparaison de l'image du véhicule avec le goulet est automatique. Cela est plus rapide qu'une comparaison effectuée par le conducteur du véhicule et permet au conducteur de réagir plus rapidement lorsqu'il se trouve devant un goulet de la chaussée. De plus, cela évite au conducteur d'effectuer une comparaison manuelle.

Ainsi, si les dimensions de l'image du véhicule sont inférieures à la dimension d'ouverture du goulet, le véhicule peut passer celui-ci sans dommages. Les moyens donnant l'image déterminent ensuite si le véhicule pourra passer sans dommages à un moment ultérieur dans le goulet encore situé devant lui au moment de la comparaison.

Selon un mode de réalisation non limitatif, le goulet représenté sur l'affichage fait partie d'une image de l'environnement enregistrée au moyen d'une caméra. Dans cette image de l'environnement représentée sur l'affichage, l'image du véhicule est projetée de telle façon qu'elle correspond, dans le plan de l'image du goulet, à l'échelle de grandeur de celui-ci.

Dans un mode de réalisation non limitatif, lorsque la comparaison est effectuée par le conducteur du véhicule, pour projeter l'image du véhicule dans le goulet sur l'affichage, le plan de l'image ainsi que la position de l'image du véhicule sont réglables manuellement sur l'affichage pour déplacer l'image du véhicule à l'emplacement du goulet. Pour effectuer ce réglage, le conducteur peut utiliser des moyens commandés manuellement, par exemple des commutateurs tactiles à coulisses, rotatifs et à poussoir. Il peut aussi déplacer l'image sur l'affichage à l'emplacement adéquat du goulet et la modifier là dans l'échelle de grandeur de telle façon que l'échelle de grandeur de l'image du véhicule corresponde au goulet ou à son environnement.

Dans un mode de réalisation non limitatif, la position et le plan de l'image du véhicule sont transférés automatiquement sur l'affichage à l'emplacement du goulet. De ce fait, un déplacement manuel de l'image du véhicule sur l'affichage peut être supprimé.

Lorsque l'image du véhicule sur l'affichage est déplacée à l'emplacement du goulet et que l'échelle de grandeur est adaptée en conséquence, on peut déterminer si le véhicule peut passer le goulet sans dommages.

Dans un mode de réalisation non limitatif, le goulet est figé dans l'affichage. Cela évite qu'il se déplace en même temps que le véhicule se déplace.

Dans un mode de réalisation non limitatif, l'image du véhicule est dimensionnée en fonction d'une vitesse du véhicule et d'une distance de projection, cette dernière étant la distance se situant entre l'avant du véhicule et de ladite image. Cela permet au conducteur de savoir de quelle manière sa position évolue par rapport au goulet.

Dans un mode de réalisation non limitatif, l'image du véhicule est définie en fonction d'un modèle de véhicule. Ainsi, les dimensions exactes du véhicule sont prises en compte lors de la comparaison entre l'image et le goulet. La comparaison est ainsi plus précise.

Dans un mode de réalisation non limitatif, en cas de recouvrement de l'image du véhicule et des zones délimitant le goulet (par exemple une entrée de tunnel, un pilier de pont et/ou un barrage d'un chantier), un signal d'avertissement est émis. Cela permet d'avertir le conducteur qu'il ne peut passer.

Dans un mode de réalisation non limitatif, l'image du véhicule est représentée par le contour du véhicule et/ou un trait illustrant son contour. Si un trait est prévu ou une image en semi-transparence, l'avantage est que la zone qui se situe à l'intérieur du véhicule représenté n'est pas masquée sur l'affichage.

Dans un mode de réalisation non limitatif, pour régler correctement la grandeur de l'image du véhicule dans le goulet, on peut prévoir de représenter dans la zone inférieure de l'affichage une voie de déplacement du véhicule allant vers l'image du véhicule.

Elle s'étend en particulier le long de la chaussée, jusqu'à l'image du véhicule, la largeur de la voie de déplacement correspondant en particulier à la largeur de l'image du véhicule (en prenant en compte la largeur des roues) dans le plan respectif de l'image. Si la voie de déplacement est représentée sous forme de barre, cette barre se rétrécit en perspective depuis le bord inférieur de l'image jusqu'à l'image du véhicule. A l'aide de la voie de déplacement représentée sur l'affichage, on peut obtenir ensuite une échelle de grandeur correcte du véhicule dans le plan de l'image ou à hauteur du goulet. Pour régler l'échelle de grandeur correcte, la voie de déplacement peut être choisie le long de la chaussée, le bord inférieur de l'image du véhicule étant réglé à la hauteur du goulet.

Dans un mode de réalisation non limitatif, il est possible que la largeur et/ou la hauteur du véhicule soient rendues visibles pour un utilisateur du véhicule dans la direction de marche devant le véhicule au moyen de sources lumineuses disposées sur ce véhicule. De ce fait, le conducteur peut, en observant l'environnement devant lui et/ou l'affichage, constater où son véhicule ira s'il conserve sa direction ou si une traversée du goulet est possible dans la direction prise. En conséquence, le conducteur est encore mieux guidé et le risque de collision en passant dans le goulet est réduit. Les sources lumineuses peuvent en particulier émettre de la lumière en couleur.

Dans un mode de réalisation non limitatif, Il est possible de prévoir que les sources lumineuses émettent le long de la chaussée et/ou projettent sur la chaussée deux lignes délimitant la largeur et/ou la hauteur du véhicule.

Le but cité précédemment est atteint aussi par un système d'assistance au conducteur pour réaliser le procédé selon l'invention, comportant :
- une caméra pour l'enregistrement de l'environnement,
- une unité d'évaluation, cette unité comportant :
   o des moyens d'analyse d'image pour détecter un goulet de la chaussée,
   o des moyens de comparaison du goulet avec une image du véhicule, et
- un affichage.

Dans un mode de réalisation non limitatif, une reproduction de l'environnement enregistré ainsi qu'une image du véhicule sont représentées sur l'affichage.

Dans un mode de réalisation non limitatif, le système d'assistance comporte en outre des moyens de réglage à commande manuelle et/ou une unité de réglage automatique pour régler la position et le plan de l'image du véhicule ainsi que pour déplacer l'image du véhicule sur l'affichage.

Dans un mode de réalisation non limitatif, le système d'assistance comporte en outre des sources lumineuses pour que la largeur et/ou la hauteur du véhicule soient rendues visibles pour un utilisateur du véhicule.

### Brève description des figures

D'autres caractéristiques et avantages de la présente invention seront mieux compris à l'aide de la description et des dessins non limitatifs parmi lesquels :
- la Fig. 1 est une représentation schématique d'un système d'assistance au conducteur selon l'invention ;
- la Fig. 2 représente un premier exemple d'affichage effectué par le système selon la Fig. 1,
- la Fig. 3 représente un deuxième exemple d'affichage effectué par le système selon la Fig. 1,
- la Fig. 4 représente un troisième exemple d'affichage effectué par le système selon la Fig. 1, et
- la Fig. 5 représente un quatrième exemple d'affichage effectué par le système selon la Fig. 1.

### Description détaillée de modes de réalisation non limitatifs de l'invention

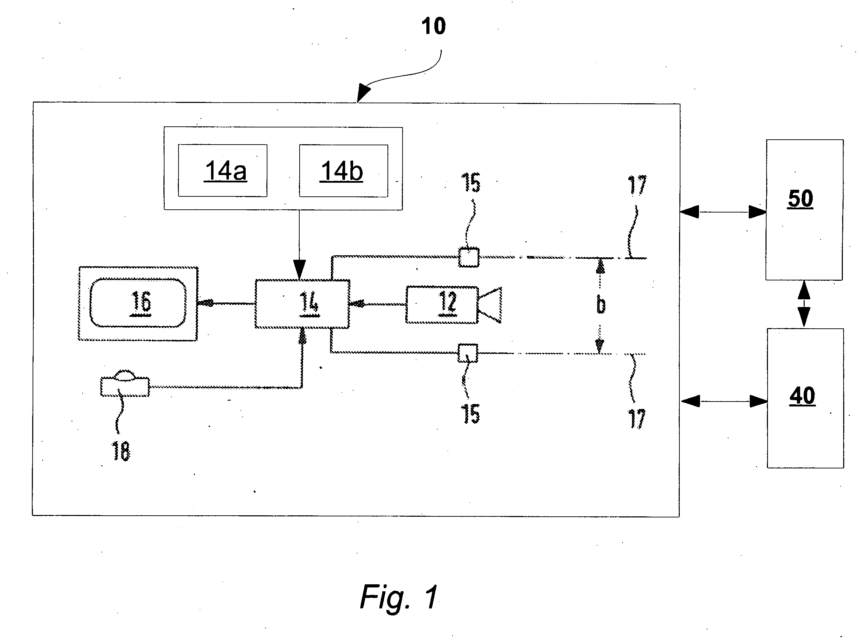

Le système d'assistance au conducteur 10 représenté schématiquement sur la Fig. 1 comprend :
- une caméra 12,
- une unité d'évaluation 14, cette unité comportant:
   o des moyens d'analyse d'image 14a pour détecter un goulet de la chaussée dans lequel le véhicule doit s'engager,
   o des moyens de comparaison 14b du goulet avec une image du véhicule, et
- un affichage 16.

Dans un mode de réalisation non limitatif, le système 10 comprend en outre :
- deux sources lumineuses 15, et
- un moyen de réglage 18 à commander par l'utilisateur du véhicule, qui peut être dans des exemples non limitatifs des commutateurs tactiles, à coulisses, rotatifs et à poussoir tels qu'un bouton rotatif et/ou un trackball, raccordé à l'unité d'évaluation 14.

Dans un mode de réalisation non limitatif, les moyens de comparaison 14b comprennent une unité de réglage automatique pour régler la position et le plan d'une image du véhicule sur l'affichage 16 et pour déplacer l'image du véhicule à l'emplacement du goulet.

Comme on va le voir en détail ci-après, une image (que l'on peut également appeler profil) du véhicule va être définie et par la suite comparée à un goulet de la chaussée qui a été détecté au préalable. Cette image prend en compte au moins une dimension (largeur/hauteur/longueur) du véhicule et la comparaison se fait entre au moins une dimension du véhicule et le goulet selon le type de goulet de la chaussée (route, tunnel, pont, parking etc...). Par exemple, si le goulet est un pont, la hauteur du véhicule est prise en compte, si le goulet est un tunnel, la hauteur et la largeur du véhicule sont pris en compte et si le goulet est un parking, la longueur du véhicule peut être également prise en compte. Comme on va le voir, cette image et le goulet peuvent être affichés sur l'affichage 16 ou non.

L'environnement du véhicule situé devant celui-ci dans la direction de marche est enregistré par la caméra 12.

Ce qui est exposé ci-après peut également s'appliquer dans la direction de marche arrière.

Cet environnement enregistré peut être représenté sur l'affichage 16. Lorsque l'environnement est ainsi affiché, les deux sources lumineuses 15 (représenté schématiquement à la Fig. 1) émettent deux lignes 17 délimitant la largeur du véhicule b le long de la chaussée. Ces lignes 17 sont visibles pour le conducteur du véhicule en observant l'environnement dans la direction de marche. Le cas échéant, les sources lumineuses 15 peuvent être conçues de façon que les lignes 17 qu'elles émettent soient visibles sur l'affichage 16 pour le conducteur. Comme sources lumineuses, on peut utiliser en particulier des sources lumineuses laser. Les sources lumineuses peuvent en particulier être logées dans le boîtier de chaque projecteur. Bien entendu, d'autres types de sources peuvent être utilisées.

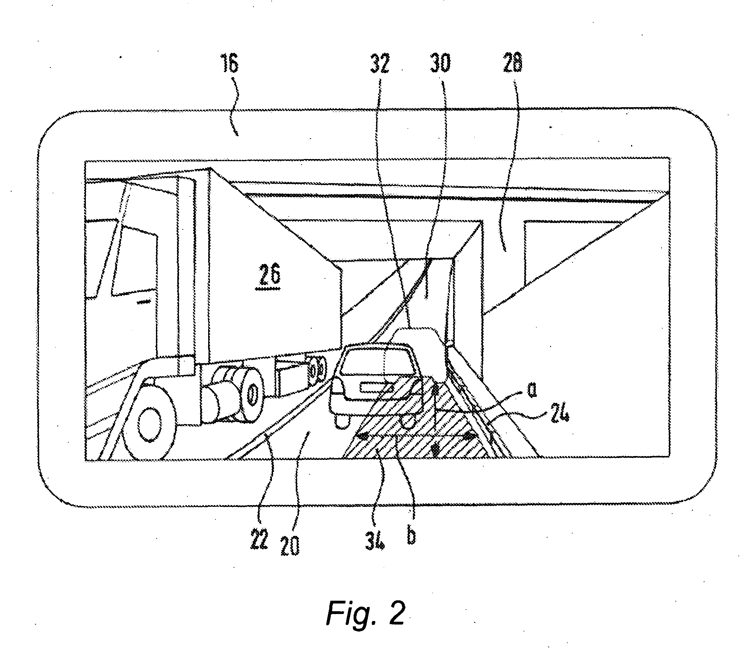

Les Fig. 2, 3 et 4 représentent par exemple une image de l'environnement enregistrée par la caméra 12. L'image de l'environnement indique la chaussée 20, la voie du véhicule étant délimitée sur le côté gauche par une ligne médiane 22 et sur le côté droit par un trottoir 24. La circulation en sens inverse 26 a lieu sur la voie opposée. Comme l'image affichée permet de le voir, le véhicule s'approche d'un passage souterrain qui est limité sur son côté droit par des piliers de pont 28. La zone entre le pilier de pont 28 et la circulation en sens inverse 26 représente un goulet de la chaussée 30. Le goulet est détecté et déterminé par les moyens d'analyse d'image 14a. De tels moyens d'analyse 14a d'image sont dans un premier exemple non limitatif décrits dans le document « Rapid Object Détection Using a Boosted Cascade of Simple Features - P.Viola - Mitsubishi Electric Research Labs, M.jones - Compaq CRL - Conference on computer vision and pattern recognition 2001 ». Un deuxième exemple non limitatif de tels moyens d'analyse est décrit dans la demande de brevet FR 05 11 488.

Le système 10 permet de déterminer si le véhicule peut passer sans dommages le goulet de la chaussée 30.

A cet effet, dans un premier mode de réalisation non limitatif, l'affichage 16 représente, comme l'indiquent les Fig. 2, 3 et 4, une image 32 du véhicule dans lequel se trouve le conducteur.

Dans une première variante, cette image 32 est sous forme par exemple d'un trait fermé représentant le contour de ce véhicule en vue arrière ou vue de face. Bien entendu, une autre forme plus basique que le contour du véhicule peut être utilisée, telle qu'un carré ou un parallélépipède. On notera que l'on peut également représenter la longueur du véhicule au moyen de l'image 32.

Une voie de déplacement 34 représentée sous forme graphique sur les Fig., s'étendant le long de la chaussée 20, en direction de l'image du véhicule 32, est représentée dans la zone inférieure de l'affichage. La largeur b de la voie de déplacement 34 correspond à la largeur de l'image du véhicule 32 dans le plan de l'image respectif (en prenant en compte la largeur des roues). En raison de la représentation en perspective, la largeur b se rétrécit en fonction de l'emplacement du plan de l'image associé. La distance a, représentée sur la Fig. 2, allant du bord inférieur de l'image de l'affichage jusqu'au bord inférieur de l'image du véhicule 32 correspond à la distance du véhicule par rapport au goulet.

Dans l'image de l'environnement enregistrée par la caméra 12, représentée sur les Fig. 2, 3 et 4, le goulet 16 se trouve dans la direction de marche devant le véhicule. La voie de déplacement 34 s'étend donc également en ligne droite dans la direction de marche. Les lignes 17 ne sont pas représentées sur l'affichage 16 de la Figure 2. Dans le cas où les lignes 17 émises par les sources lumineuses 15 seraient représentées sur l'affichage 16, ces lignes 17 limiteraient la voie de déplacement 34 dans la situation représentée par l'affichage 16. Si le goulet de la chaussée 30 ne se situe pas en ligne droite dans la direction de marche devant le véhicule, les lignes 17 ne recouvrent pas les lignes de délimitation de la voie de déplacement 34, mais présentent une autre direction.

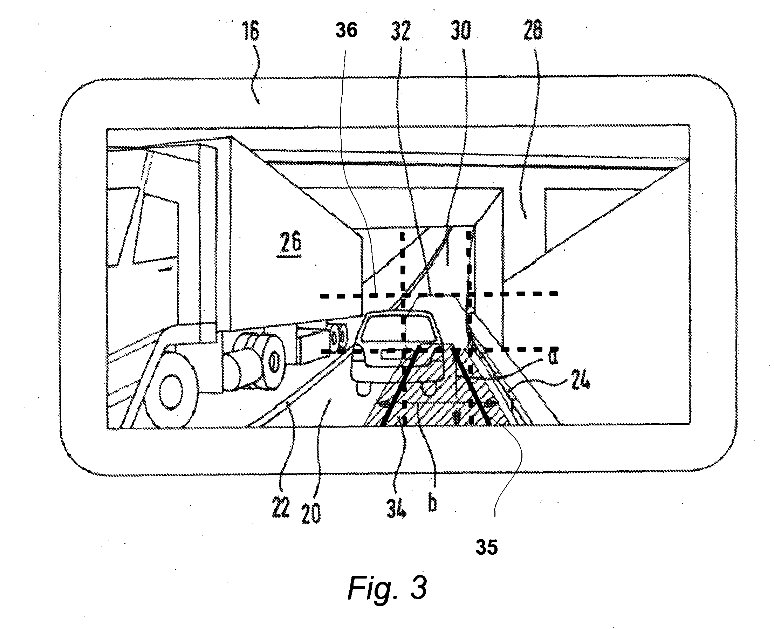

On peut également représenter des trajectoires 35 correspondant à l'angle de direction des roues comme indiqué à la Fig. 3 en trait plein en gras. Ces trajectoires sont représentées par des lignes représentant le lieu de passage des roues projetées jusqu'au goulet 30. Le fait de représenter les trajectoires des roues permet à un conducteur de se garer plus facilement, par exemple, lorsqu'il veut faire un créneau, ou encore de rouler plus facilement sur une route sinueuse. Cela lui permet ainsi de détecter et d'éviter les obstacles sur la trajectoire des roues ou encore de figurer un recouvrement. On notera que les trajectoires des roues ne sont pas forcément parallèles à la voie de déplacement 34.

On notera que les trajectoires peuvent être adaptées en prenant en compte l'angle au volant. Ce dernier est donné par exemple par un capteur et calculé par exemple par rapport à l'axe vertical du véhicule. A ce moment, on l'appelle l'angle de lacet. Les lignes 35 représentant les trajectoires peuvent ainsi ne pas être des lignes droites, mais des lignes courbes.

Les trajectoires peuvent être divisées en deux types, une pour les roues avant, et une pour les roues arrière. Cela permet de prendre en compte le rayon de braquage qui est différent pour ces deux types de roues.

L'image du véhicule 32 représentée sur la Fig. 2 ou 3 peut être déplacée et sa dimension réglée sur l'affichage 16 avec le moyen de réglage 18 commandé manuellement. Le déplacement peut être continu ou graduel par paliers. Ainsi, il est possible de déplacer l'image du véhicule 32 à l'emplacement du goulet de la chaussée 30 et de régler l'échelle de grandeur de façon que l'échelle de grandeur de l'image 32 corresponde à celle du goulet 30 représenté et se situe dans son plan d'image.

Afin d'aider le conducteur à déplacer l'image 32 du véhicule sur la voie de déplacement 34, on peut également utiliser des moyens d'aide au placement telles que des lignes verticales et horizontales 36 s'étendant de part et d'autre de l'image 32 du véhicule, comme illustré sur la Fig. 3 en traits pointillés en gras.

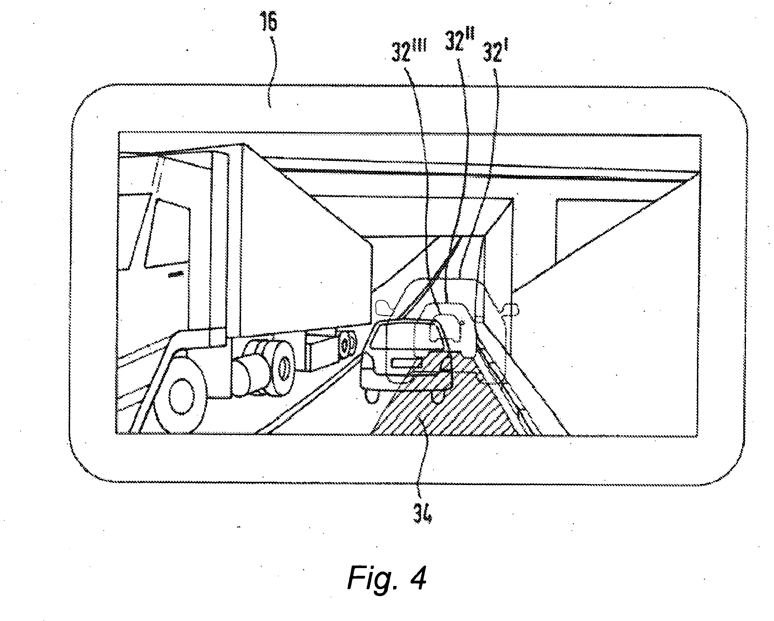

La Fig. 4 représente dans l'ensemble trois différentes échelles de grandeur des images 32, qui se situent dans trois différents plans d'image. La plus grande image du véhicule 32' représentée se situe dans le plan de l'image de l'entrée du véhicule dans le passage souterrain. L'image du véhicule 32" moyenne représentée correspond à l'échelle de grandeur du véhicule à l'intérieur du passage souterrain. La troisième et plus petite représentation de l'image du véhicule"' correspond à l'échelle de grandeur de celui-ci lorsqu'il sort du passage souterrain et se situe dans le plan de l'image associé.

On notera que la position du goulet 30 dans lequel le conducteur veut passer est de préférence figée dans l'affichage 16. Ainsi, selon que le véhicule avance ou recule en direction du goulet 30, l'image 32, 32', 32" du véhicule s'adapte à l'image du goulet 30, ce dernier ne bougeant pas dans l'affichage 16.

On notera par ailleurs que la taille de l'image 32 du véhicule peut être adaptée en fonction d'une distance de projection d2 et de la vitesse du véhicule Vit. Ainsi, la voie de déplacement 34 est fixée à la distance initiale a précise entre le véhicule et le goulet de la chaussée 30. En prenant en compte la vitesse du véhicule Vit, et en la multipliant par le temps de déplacement T, on obtient une distance de déplacement d1 et une distance de projection d2 égale à la distance initiale a moins la distance d1. L'image du véhicule 32 est ainsi re-dimensionnée de telle sorte qu'elle s'agrandit à mesure que le véhicule se rapproche du goulet de la chaussée 30. On a ainsi une correspondance entre la taille de l'image du véhicule 32 et la distance de projection d2, la distance de projection étant la distance se situant entre l'avant du véhicule et de l'image 32. Une telle correspondance entre différentes tailles de l'image 32 et différentes valeurs de la distance de projection d2 peut être enregistrée en mémoire dans le véhicule.

On notera également que l'on peut régler la distance de projection d2, soit à un minimum et/ou à un maximum par exemple en usine.

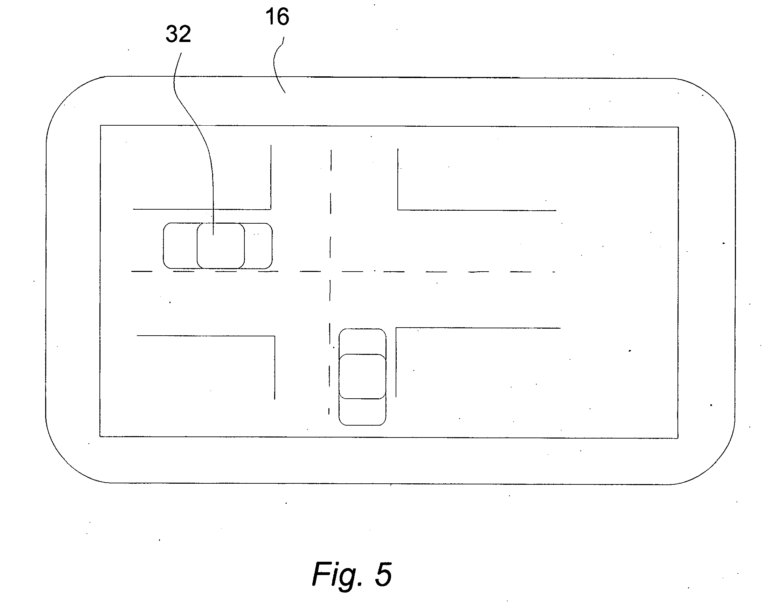

Dans une deuxième variante non limitative de ce premier mode de réalisation, l'affichage 16 représente, comme l'indique la Fig. 5, une image 32 « vue d'avion » du véhicule dans lequel se trouve le conducteur, avec son environnement. Ce type d'affichage est appelé en anglais « bird view » et est décrit dans un exemple non limitatif dans le document « Improvement of the driving safety using a virtual driver - F.Holzmann, et al - Daimler Chrysler AG, truck Product Creation - Ecole Polytechnique de Lausanne - Technical University of Munich » et en particulier dans le chapitre IV A et B. Un tel affichage 16 permet de vérifier la longueur/largeur du véhicule par rapport à un goulet 30, tel que par exemple une place de parking, ou encore permet de représenter simplement le trafic en sens inverse ou en perpendiculaire et de vérifier que le véhicule ne dépasse pas de la route lorsqu'il y a un croisement tel qu'illustré à la Fig. 5. Ce type de vue est ainsi également adapté pour notamment prévenir le conducteur des dangers provenant sur le côté de son véhicule. Par exemple, si sa stratégie de conduite n'est pas adaptée pour entrer dans une place de parking, un signal d'avertissement peut être émis telle que par exemple une coloration en rouge du côté de la voiture où il peut y avoir un danger.

Bien entendu, d'autres types de vue peuvent être utilisés tels qu'une vue en 3D du véhicule.

En conséquence, la comparaison de l'image du véhicule 32 avec la largeur intérieure du goulet 30 représenté dans le plan de l'image correspondant permet de constater si le véhicule peut passer le goulet sans dommages. Le conducteur peut effectuer cette comparaison en particulier en observant l'image du véhicule 32 et le goulet 30 sur l'affichage 16.

Dans un deuxième mode de réalisation plus perfectionné, cette comparaison peut être effectuée automatiquement au moyen de l'unité d'évaluation 14, par les moyens d'analyse 14a de l'image qui détectent le goulet 30 et par les moyens de comparaison 14b. Un traitement approprié de l'image permet de calculer la largeur intérieure d'un tel goulet 30 et de comparer l'image du véhicule 32 avec le plan de l'image respectif. Dans une autre variante, la comparaison s'effectue en positionnant les deux images respectives du véhicule 32 et du goulet 30 dans un même plan pour effectuer la comparaison (en réglant par exemple la position et le plan de l'image du véhicule 32 et en la déplacement jusqu'à l'emplacement du goulet).

Dans ce cas, la comparaison n'est plus faite par le conducteur.

L'affichage 16 peut ainsi ne pas afficher l'image 32 du véhicule ni l'image du goulet 30. Un signal visuel peut être émis sur l'affichage 16 pour avertir le conducteur s'il peut passer sans dommages. L'affichage 16 peut également ne pas être actif. A ce moment, une autre interface peut être utilisée telle qu'une interface sonore et/ou tactile (non représentée) pour avertir le conducteur s'il peut passer sans dommages. On peut ainsi très bien avoir une caméra 12 comportant des capteurs vidéo sans avoir d'interface visuelle.

Bien entendu, on peut prévoir un troisième mode de réalisation dans lequel la comparaison est automatique, mais l'affichage 16 affiche quand même l'image du véhicule 32, l'image du goulet 30 et l'environnement. Ceci est effectué grâce à l'unité de réglage automatique des moyens de comparaison 14b qui permet de régler la position et le plan d'une image du véhicule sur l'affichage 16 et pour déplacer l'image du véhicule à l'emplacement du goulet.

Ainsi, s'il est constaté (visuellement par le conducteur et/ou par un signal optique et/ou sonore émis et/ou signal tactile) que le véhicule peut passer le goulet 30 sans dommages, le conducteur peut se concentrer sur ce qui se passe devant lui et conduire de façon appropriée dans le goulet 30.

On notera que cela est facilité par les lignes 17, car le conducteur a une information lui indiquant si la direction de marche qu'il a prise est correcte pour passer le goulet sans dommages. Par conséquent, il peut se concentrer sur ce qui se passe devant le véhicule, en tenant compte des lignes 17, et se détourner de l'affichage 16. Les lignes 17 aident donc le conducteur à traverser le goulet sans dommages. Les sources lumineuses 15 peuvent émettre en particulier une lumière de couleur, qui se différencie de l'environnement et est bien visible pour le conducteur. De même, les lignes 17 peuvent être représentées en couleur sur l'affichage 16.

Dans le cas où il n'est pas possible de passer le goulet 30 sans dommages, également un signal d'avertissement peut être donné au conducteur. Le signal d'avertissement donné au conducteur en cas de recouvrement peut être optique, sonore ou tactile. Par exemple, un signal acoustique peut être émis ou des symboles d'avertissement peuvent apparaître sur l'affichage 16 tels que « allez », « allez-y lentement », « n'y allez pas » etc.... D'autres systèmes d'assistance au conducteur peuvent aussi être activés, en particulier un freinage automatique du véhicule peut s'effectuer en cas de collision imminente.

Il est possible aussi que d'autres systèmes d'assistance au conducteur, qui donnent lieu par exemple à un braquage forcé et/ou un freinage forcé, soient couplés au signal d'avertissement.

On notera que, de manière générale, afin de déterminer l'image 32 du véhicule (qu'elle soit affichée ou non sur l'affichage 16), on utilise comme paramètre le modèle du véhicule ce qui permet d'avoir les dimensions exactes du véhicule. Ainsi, le modèle du véhicule est enregistré en mémoire dans le véhicule, en usine ou en second monte.

Par ailleurs, des paramètres tels que par exemple la largeur des portières ou la longueur du coffre peuvent être également utilisés afin de savoir si, lorsque le véhicule est notamment à l'arrêt, il est possible de les ouvrir lorsque le véhicule se trouve dans un goulet de la chaussée 30 tel qu'un parking. Le modèle du véhicule peut être enregistré en usine ou en seconde monte.

D'autres paramètres peuvent également être pris en compte tels que la présence de bicyclettes sur le toit ou d'un coffre à bagage amovible de toiture. Ces paramètres peuvent être enregistrés en mémoire, à l'initiative de l'utilisateur du véhicule, par une interface appropriée (par exemple au démarrage du système 10), ou de façon automatique au moyen de capteurs de présence par exemple.

Dans un mode de réalisation non limitatif, le système d'assistance 10 peut coopérer avec un système de détection d'obstacles 40 tel qu'illustré à la Fig. 1. Ce système de détection d'obstacles 40 permet de déterminer s'il existe un obstacle sur la voie de déplacement 34, c'est-à-dire entre le véhicule et le goulet 30, et quel est le type d'obstacle (véhicule, vélomoteur, etc...) et si cet obstacle est mobile ou non mobile. Un tel système est basé par exemple sur un ou plusieurs capteurs (vision, radar, ultrasons, laser etc...), bien connus de l'homme du métier, et/ou sur la fusion des données issues de ces capteurs. Un exemple non limitatif de système de détection d'obstacles 40 utilisant un capteur radar est décrit dans le document « Object Classification With automative Radar - F.Kruse, F.Fölster, M.Ahrholdt, MM. Meinecke, H.Rohling - Technical University Of Hamburg-Harburg, Dpt of Telecommunications - Volkswagen AG, Research Electronic Systems». Un autre exemple non limitatif de système de détection d'obstacles 40 utilisant un autre type de capteur est décrit dans le document « Vehicle Détection and Compass Applications using AMR Magnetic Sensors - MJ.Caruso, LS.Withanawasam - Honeywell, SSEC » et en particulier dans les chapitres AMR Sensor Applications et Vehicle classification.

Soit le système de détection d'obstacles est automatique, soit semi-automatique. Dans le dernier cas, une interface appropriée permet à l'utilisateur du véhicule lui-même de définir l'obstacle.

Ainsi, si un tel obstacle, tel qu'une voiture par exemple, existe sur la voie de déplacement 34, un signal est émis (sonore, visuel...etc) avertissant le conducteur qu'il ne peut passer.

Dans un mode de réalisation non limitatif, le système d'assistance 10 peut également coopérer avec des systèmes embarqués 50 dans la voiture, tel que la commande des rétroviseurs, de manière à piloter automatiquement ces systèmes. Par exemple, si le conducteur veut se garer dans une place de parking étroite, le système d'assistance 10 repère que la place est trop étroite et peut émettre un signal d'avertissement comme vu précédemment, mais peut également rabattre automatiquement un rétroviseurs si cela suffit pour entrer dans la place de parking. Il en est de même avec le système de détection d'obstacles 40 qui peut également coopérer avec des systèmes embarqués 50.

Ce pilotage automatique peut être une option à activer sur une interface appropriée par le conducteur. On pourrait également appliquer ce pilotage automatique aux portières ou au coffre de la voiture ou encore à un actionnement graduel de la pédale de frein ou de systèmes automatiques de parking.

Ainsi, un tel système d'assistance 10 peut être utilisé dans les cas de mobilité du véhicule (en marche avant ou arrière, sur la route ou lorsque le conducteur veut se garer dans un parking par exemple), mais également dans les cas d'immobilité du véhicule (par exemple quand un utilisateur du véhicule veut ouvrir une portière). Il permet ainsi d'éviter des accidents, d'abîmer la voiture mais également permet d'aider un conducteur de manoeuvrer correctement son véhicule.

## Revendications

1. Procédé de détermination de la capacité de passage d'un véhicule dans un goulet de la chaussée (30) comportant les étapes de :
- détecter un goulet de la chaussée (30),
- définir une image du véhicule (32), et
- comparer l'image du véhicule (32) avec le goulet (30), procédé dans lequel le goulet et l'image du véhicule (32), sont représentés sur un affichage (16), de telle façon que la comparaison du goulet (30) représenté avec l'image du véhicule (32) permet de constater si le véhicule peut passer le goulet sans dommages.

2. Procédé selon la revendication 1, dans lequel la comparaison de l'image du véhicule (32) avec le goulet (30) est automatique.

3. Procédé selon l'une des revendications 1 à 2, **caractérisé en ce que** le goulet (30) représenté sur l'affichage fait partie d'une image d'un environnement enregistrée.

4. Procédé selon l'une des revendications 1 à 3, **caractérisé en ce que** la position et le plan de l'image du véhicule (32, 32', 32", 32"') sont réglables manuellement sur l'affichage (16) pour déplacer l'image du véhicule à l'emplacement du goulet (30).

5. Procédé selon l'une des revendications 1 à 3, **caractérisé en ce que** la position ainsi que le plan de l'image du véhicule (32) sont déplacés automatiquement sur l'affichage (16) à l'emplacement du goulet (30).

6. Procédé selon au moins une des revendications précédentes, **caractérisé en ce que** le goulet (30) est figé dans l'affichage (16).

7. Procédé selon au moins une des revendications précédentes, **caractérisé en ce que** l'image du véhicule (32) est dimensionnée en fonction d'une vitesse du véhicule (Vit) et d'une distance de projection (d2), cette dernière étant la distance se situant entre l'avant du véhicule et de ladite image (32).

8. Procédé selon au moins une des revendications précédentes, **caractérisé en ce que** l'image du véhicule (32) est définie en fonction d'un modèle de véhicule.

9. Procédé selon au moins une des revendications précédentes, **caractérisé en ce que**, en cas de recouvrement de l'image du véhicule (32) et des zones (26, 28) délimitant le goulet (30), un signal d'avertissement est émis.

10. Procédé selon au moins une des revendications précédentes, **caractérisé en ce que** l'image du véhicule (32) est représentée par le contour du véhicule et/ou un trait illustrant son contour.

11. Procédé selon au moins une des revendications précédentes, **caractérisé en ce qu'**une voie de déplacement (34) allant vers l'image du véhicule (32) est représentée dans la zone inférieure de l'affichage.

12. Procédé selon au moins une des revendications précédentes, **caractérisé en ce que** la largeur et/ou la hauteur du véhicule est rendue visible pour un utilisateur du véhicule dans la direction de marche devant le véhicule au moyen de sources lumineuses (15) disposées sur ce véhicule.

13. Procédé selon la revendication précédente, **caractérisé en ce que** les sources lumineuses émettent le long de la chaussée et/ou projettent sur la chaussée deux lignes délimitant la largeur et/ou la hauteur du véhicule.

14. Système d'assistance au conducteur (10) pour la réalisation du procédé selon au moins une des revendications précédentes, comportant :
- une caméra (12) pour l'enregistrement de l'environnement.
- une unité d'évaluation (14), cette unité comportant :
o des moyens d'analyse d'image (14a) pour détecter un goulet de la chaussée (30),
o des moyens de comparaison (14b) du goulet (30) avec une image du véhicule (32), et
- un affichage (16).
- des moyens pour la reproduction de l'environnement enregistré ainsi qu'une image du véhicule (32) sur l'affichage (16), de telle façon que la comparaison du goulet représenté avec l'image du véhicule (32) permet de constater si le véhicule peut passer le goulet sans dommage.

15. Système d'assistance (10) selon l'une des revendications 13 ou 14, comportant en outre des moyens de réglage à commande manuelle (18) et/ou une unité de réglage automatique pour régler la position et le plan de l'image du véhicule (32) sur l'affichage (16) et pour déplacer l'image du véhicule (32) à l'emplacement du goulet (30).

16. Système d'assistance (10) selon l'une des revendications précédentes 13 à 15, comportant en outre des sources lumineuses (15) pour rendre la largeur et/ou la hauteur du véhicule visibles pour un utilisateur du véhicule.

## Claims

1. Method of determining the ability of a vehicle to pass through a restricted gap in the roadway (30) including the steps of:
- detecting a restricted gap in the roadway (30),
- defining an image of the vehicle (32), and
- comparing the vehicle image (32) with the restricted gap (30),
in which method the gap and the vehicle image (32) are represented on a display (16) in a manner such that comparison of the gap (30) represented with the vehicle image (32) makes it possible to determine whether the vehicle can pass through the gap without damage.

2. Method according to claim 1, wherein comparison of the vehicle image (32) with the gap (30) is automatic.

3. Method according to any of claims 1 to 2, **characterised in that** the gap (30) represented on the display forms part of a recorded image of an environment.

4. Method according to any of claims 1 to 3, **characterised in that** the position and the plane of the vehicle image (32, 32', 32", 32"') are manually adjustable on the display (16) to move the vehicle image to the location of the gap (30).

5. Method according to any of claims 1 to 3, **characterised in that** the position and the plane of the vehicle image (32) are moved automatically on the display (16) to the location of the gap (30).

6. Method according to at least one of the preceding claims, **characterised in that** the gap (30) is fixed in the display (16).

7. Method according to at least one of the preceding claims, **characterised in that** the vehicle image (32) is sized in relation to a speed of the vehicle (Vit) and a projection distance (d2), the latter being the distance between the front of the vehicle and said image (32).

8. Method according to at least one of the preceding claims, **characterised in that** the vehicle image (32) is defined in relation to a vehicle model.

9. Method according to at least one of the preceding claims, **characterised in that**, in case of overlap of the vehicle image (32) and zones (26, 28) delineating the gap (30), a warning signal is emitted.

10. Method according to at least one of the preceding claims, **characterised in that** the vehicle image (32) is represented by the outline of the vehicle and/or a line depicting its outline.

11. Method according to at least one of the preceding claims, **characterised in that** a travel path (34) running towards the vehicle image (32) is shown in the bottom part of the display.

12. Method according to at least one of the preceding claims, **characterised in that** the width and/or height of the vehicle is made visible for a user of the vehicle in the direction of travel in front of the vehicle by means of light sources (15) disposed on said vehicle.

13. Method according to the preceding claim, **characterised in that** the light sources transmit along the roadway and/or project onto the roadway two lines delimiting the width and/or height of the vehicle.

14. Driver assistance system (10) for implementation of the method according to at least one of the preceding claims, including:
- a camera (12) to record the environment,
- an evaluation unit (14), this unit including:
○ image analysis means (14a) to detect a restricted gap in the roadway (30),
○ means of comparing (14b) the gap (30) with an image of the vehicle (32), and
- a display (16)
- means for the reproduction of the recorded environment and an image of the vehicle (32) on the display (16) in a manner such that comparison of the gap represented with the vehicle image (32) makes it possible to determine whether the vehicle can pass through the gap without damage

15. Assistance system (10) according to any of claims 13 or 14, additionally including manually-operated adjustment means (18) and/or an automatic adjustment unit to adjust the position and the plane of the vehicle image (32) on the display (16) and to move the vehicle image (32) to the location of the gap (30).

16. Assistance system (10) according to one of preceding claims 13 to 15, additionally including light sources (15) to render the width and/or the height of the vehicle visible for a user of the vehicle.

## Patentansprüche

1. Verfahren zum Ermitteln der Durchfahrmöglichkeit eines Fahrzeugs an einer Fahrbahnengstelle (30), das die folgenden Schritte umfasst:
- Erkennen einer Fahrbahnengstelle (30),
- Bestimmen eines Fahrzeugbildes (32) und
- Vergleichen des Fahrzeugbildes (32) mit der Engstelle (30), wobei bei dem Verfahren die Engstelle und das Fahrzeugbild (32) auf einer Anzeigeeinrichtung (16) derart dargestellt sind, dass der Vergleich der dargestellten Engstelle (30) mit dem Fahrzeugbild (32) festzustellen erlaubt, ob das Fahrzeug die Engstelle gefahrlos passieren kann.

2. Verfahren nach Anspruch 1,
bei dem der Vergleich des Fahrzeugbildes (32) mit der Engstelle automatisch erfolgt.

3. Verfahren nach einem der Ansprüche 1 bis 2,
**dadurch gekennzeichnet, dass** die auf der Anzeigeeinrichtung dargestellte Engstelle (30) zu einem Bild einer erfassten Umgebung gehört.

4. Verfahren nach einem der Ansprüche 1 bis 3,
**dadurch gekennzeichnet, dass** die Position und die Ebene des Fahrzeugbildes (32, 32', 32", 32"') auf der Anzeigeeinrichtung (16) manuell verstellbar sind, um das Fahrzeugbild an den Ort der Engstelle (30) zu verschieben.

5. Verfahren nach einem der Ansprüche 1 bis 3,
**dadurch gekennzeichnet, dass** die Position sowie die Ebene des Fahrzeugbildes (32) auf der Anzeigeeinrichtung (16) automatisch an den Ort der Engstelle (30) verschoben werden.

6. Verfahren nach wenigstens einem der vorhergehenden Ansprüche,
**dadurch gekennzeichnet, dass** die Engstelle (30) in der Anzeigeeinrichtung (16) fixiert ist.

7. Verfahren nach wenigstens einem der vorhergehenden Ansprüche,
**dadurch gekennzeichnet, dass** das Fahrzeugbild (32) in Abhängigkeit einer Fahrzeuggeschwindigkeit (Vit) und einer Projektionsentfernung (d2) bemessen ist, wobei es sich bei Letzterer um die Entfernung handelt, die zwischen der Fahrzeugfrontseite und dem Bild (32) liegt.

8. Verfahren nach wenigstens einem der vorhergehenden Ansprüche,
**dadurch gekennzeichnet, dass** das Fahrzeugbild (32) in Abhängigkeit eines Fahrzeugmodells festgelegt ist.

9. Verfahren nach wenigstens einem der vorhergehenden Ansprüche,
**dadurch gekennzeichnet, dass** bei einer Überdeckung des Fahrzeugbildes (32) mit den die Engstelle begrenzenden Bereichen (26, 28) ein Warnsignal abgegeben wird.

10. Verfahren nach wenigstens einem der vorhergehenden Ansprüche,
**dadurch gekennzeichnet, dass** das Fahrzeugbild (32) durch den Fahrzeugumriss und/oder einen den Umriss abbildenden Strich wiedergegeben ist.

11. Verfahren nach wenigstens einem der vorhergehenden Ansprüche,
**dadurch gekennzeichnet, dass** ein zum Fahrzeugbild (32) verlaufender Verlagerungsweg (34) im unteren Bereich der Anzeigeeinrichtung wiedergegeben ist.

12. Verfahren nach wenigstens einem der vorhergehenden Ansprüche,
**dadurch gekennzeichnet, dass** die Breite und/oder die Höhe des Fahrzeugs für einen Fahrzeugnutzer mittels an diesem Fahrzeug angeordneter Lichtquellen (15) in Fahrtrichtung vor dem Fahrzeug sichtbar gemacht wird.

13. Verfahren nach dem vorhergehenden Anspruch,
**dadurch gekennzeichnet, dass** die Lichtquellen entlang der Fahrbahn Licht emittieren und/oder zwei Linien auf die Fahrbahn projizieren, die die Breite und/oder Höhe des Fahrzeugs begrenzen.

14. Fahrerassistenzsystem (10) zur Durchführung des Verfahrens nach wenigstens einem der vorhergehenden Ansprüche, mit
- einer Kamera (12) zum Erfassen der Umgebung,
- einer Auswerteeinheit (14), wobei diese Einheit umfasst:
- Bildanalysemittel (14a) zum Erkennen einer Fahrbahnengstelle (30),
- Mittel (14b) zum Vergleichen der Engstelle (30) mit einem Fahrzeugbild (32), und
- einer Anzeigeeinrichtung (15),
- Mitteln zur Wiedergabe der erfassten Umgebung sowie eines Fahrzeugbildes (32) auf der Anzeigeeinrichtung (16), so dass der Vergleich der dargestellten Engstelle mit dem Fahrzeugbild (32) festzustellen erlaubt, ob das Fahrzeug die Engstelle gefahrlos passieren kann.

15. Fahrerassistenzsystem (10) nach einem der Ansprüche 13 oder 14, das ferner manuelle Verstellmittel (18) und/oder eine automatische Verstelleinheit zum Verstellen der Position und der Ebene des Fahrzeugbildes (32) auf der Anzeigeeinrichtung (16) und zum Verschieben des Fahrzeugbildes (32) an den Ort der Engstelle (30) umfasst.

16. Fahrerassistenzsystem (10) nach einem der vorhergehenden Ansprüche 13 bis 15, das ferner Lichtquellen (15) zum sichtbar machen der Breite und/oder der Höhe des Fahrzeugs für einen Fahrzeugnutzer umfasst.
